# EUROPÄISCHE PATENTSCHRIFT

(11) **EP 2 777 794 B1**
(45) Veröffentlichungstag und Bekanntmachung des Hinweises auf die Patenterteilung: **29.08.2018**
(21) Anmeldenummer: 14405020.0
(22) Anmeldetag: 07.03.2014
(51) Int. Cl.: B01D 35/147

(54) **Filterkartusche sowie Filtereinrichtung**
Filter cartridge and filter device
Cartouche filtrante ainsi que dispositif de filtre

(30) Priorität: 11.03.2013 CH 5762013
(43) Veröffentlichungstag der Anmeldung: 17.09.2014
(73) Patentinhaber: ELYSATOR Genossenschaft, 8865 Bilten (CH)
(72) Erfinder: Rickenbach, Manuel, 8865 Bilten (CH)
(74) Vertreter: Wagner, Wolfgang Heribert

(56) Entgegenhaltungen:
- FR-A1- 2 949 457
- US-A- 3 864 090
- US-A- 4 347 224

## Beschreibung

### Technisches Gebiet

Die Erfindung betrifft eine Filterkartusche und eine Filtereinrichtung, wie sie zur Reinigung, insbesondere Entsalzung von Wasser in technischen Kreisläufen eingesetzt werden.

### Stand der Technik

Gattungsgemässe Filterkartuschen und derartige Filterkartuschen umfassende Filtereinrichtungen sind seit langem bekannt. Sie werden in technischen Kreisläufen z.B. in Heiz- oder Kühlanlagen eingesetzt, um Wasser zu entsalzen und dadurch Korrosion und Ablagerungen in der Anlage vorzubeugen.

Üblicherweise werden dabei Filtereinrichtungen eingesetzt, bei denen mindestens während des Füllens einer Anlage mit Wasser dasselbe zur Gänze durch das Filtervolumen der Filterkartusche geleitet wird. Dadurch entsteht ein hoher Strömungswiderstand an der Filterkartusche, der entsprechend starke Pumpen und hohe Druckfestigkeit der Anlage erfordert.

Aus US 4 347 224 A ist eine Vorrichtung bekannt, die konstruktiv weitgehend der hier vorgeschlagenen Filtereinrichtung entspricht. Doch es handelt sich dabei um eine Verteileinrichtung, bei der die nachfüllbare Kartusche einen wasserlöslichen Stoff enthält, der in einen Kreislauf abgegeben wird.

### Darstellung der Erfindung

Der Erfindung liegt die Aufgabe zu Grunde, eine Filterkartusche anzugeben, welche es gestattet, das Wasser derart zu reinigen, dass dabei der Strömungswiderstand im Kreislauf nicht wesentlich erhöht wird. Diese Aufgabe wird durch die Erfindung, wie sie in den Ansprüchen gekennzeichnet ist, gelöst. Ausserdem wird eine Filtereinrichtung angegeben, welche eine erfindungsgemässe Filterkartusche enthält.

### Kurze Beschreibung der Zeichnungen

Im folgenden wird die Erfindung anhand einer Figur, welche lediglich ein Ausführungsbeispiel darstellt, näher erläutert.

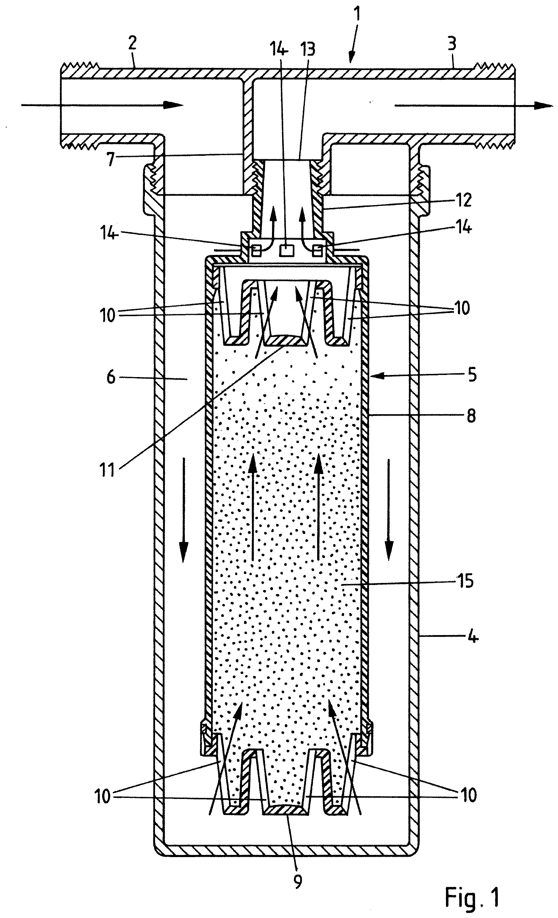

Fig. 1 zeigt einen z.T. etwas schematischen Schnitt durch eine erfindungsgemässe Filtereinrichtung.

### Wege zur Ausführung der Erfindung

Die Filtereinrichtung weist ein Filtergehäuse auf, das ein Anschlussstück 1 umfasst mit einem ersten Anschlussstutzen 2, welcher eine Zuflussleitung bildet und einem zweiten Anschlusstutzen 3, welcher eine Abflussleitung bildet. Das Anschlusstück 1, das vorzugsweise aus Metall, z.B. Aluminium, Stahl oder Kupfer besteht, kann in bekannter Weise in eine Leitung eines technischen Wasserkreislaufs, z.B. einer Heizung, eingeschraubt werden. Im ersten Anschlusstutzen 2 und im zweiten Anschlusstutzen 3 kann jeweils ein Ventil vorgesehen sein.

Das Filtergehäuse umfasst weiter eine zylindrische Hülse 4, welche mit einem Flansch des Anschlussstücks 1 verschraubt ist. Sie umgibt eine ebenfalls im wesentlichen zylindrische erfindungsgemässe Filterkartusche 5 mit Abstand, derart, dass zwischen der Hülse 4 und einer Aussenseite der Filterkartusche 5 ein Zwischenvolumen 6 liegt, in welches die Zuflussleitung mündet. Das Anschlusstück 1 weist weiter einen Verbindungsstutzen 7 zum Anschluss der Filterkartusche 5 auf, welcher mit der Abflussleitung verbunden ist.

Die Filterkartusche 5 weist ein Gehäuse aus Kunststoff auf, das eine zylindermantelförmige Seitenwand 8 umfasst sowie einen an einem Zuflussbereich an einem unteren Ende der Seitenwand 8 eine Querwand bildenden gewellten Boden 9, der mit mehreren als Schlitze 10 ausgebildeten Öffnungen versehen ist sowie an einem Abflussbereich an einem oberen Ende einen ebenfalls eine Querwand bildenden gewellten Zwischenboden 11, der im wesentlichen gleich ausgebildet ist wie der Boden 9, insbesondere ebenfalls mit als Schlitze 10 ausgebildeten Öffnungen versehen ist. Unmittelbar oberhalb des Zwischenbodens 11 schliesst an die Seitenwand 8 über ein kreisringförmiges Zwischenstück ein im wesentlichen zylindrischer Stutzen 12 an, der den Zwischenboden 11 mit einer Ausströmöffnung 13 der Filterkartusche 5 verbindet, welche in die Abflussleitung mündet. Der Stutzen 12 weist an seinem oberen Ende ein Aussengewinde auf und ist in den Verbindungsstutzen 7 eingeschraubt.

An einem etwas erweiterten an das kreisringförmige Zwischenstück anschliessenden Bereich ist der Stutzen 12 von mehreren gleichmässig über seinen Umfang verteilten Überbrückungsöffnungen 14 durchbrochen, welche das die Aussenseite der Filterkartusche 5 umgebende Zwischenvolumen 6 mit dem Inneren des Stutzens 12 und so mit der Ausströmöffnung 13 verbinden.

Zwischen dem Boden 9 und dem Zwischenboden 11 liegt ein Filtervolumen, das ganz oder teilweise - z.B. zu zwischen 50% und 90%, insbesondere zu ca. 80% - mit einem nicht wasserlöslichen Filtergranulat 15 gefüllt ist. Das Filtergranulat 15 kann etwa ganz oder teilweise aus einem Ionentauscherharz bestehen und ist gerade so grobkörnig, dass es nicht durch die Schlitze 10 entweichen kann, sondern zuverlässig im unten und oben durch den Boden 9 bzw. den Zwischenboden 11 begrenzten Filtervolumen festgehalten wird.

Durch den ersten Anschlussstutzen 2 zufliessendes Rohwasser gelangt in das Zwischenvolumen 6 und strömt zum Teil an der Aussenseite der Filterkartusche 5 entlang zum Boden der Hülse 4, wo es dann durch die Schlitze 10 im Boden 9 der Filterkartusche 5 ins Filtervolumen eindringt. Es durchströmt dann das Filtergranulat 15 von unten nach oben und erreicht durch den Zwischenboden 11 und den Stutzen 12 die Ausströmöffnung 13, worauf es durch den zweiten Anschlussstutzen 3 abfliesst. Ein Teil des Rohwassers gelangt jedoch durch die Überbrückungsöffnungen 14 direkt vom Zwischenvolumen 6 in das Innere des Stutzens 12, wo es sich mit dem gefilterten Wasser vermischt und ebenfalls durch den zweiten Anschlussstutzen 3 abfliesst.

Die Überbrückungsöffnungen 14 sind so dimensioniert, dass sie den Strömungswiderstand insgesamt hinreichend herabsetzen, aber die Strömung durch das Filtervolumen so eingestellt ist, dass sie einerseits ausreicht, um das Filtergranulat 15 etwas aufzuwirbeln, sodass es die Schlitze 10 im Boden 9 nicht verlegt und auch hier der Strömungswiderstand möglichst gering ist, andererseits nicht so heftig ist, dass es zu einem Verlegen der Schlitze 10 im Zwischenboden 11 käme. Damit ein Aufwirbeln des Filtergranulats 15 möglich ist, sollte dasselbe das Filtervolumen nicht ganz ausfüllen, sondern vorzugsweise zu ca. 80%. Auf diese Weise wird das Wasser in einem technischen Kreislauf gewöhnlich binnen einiger Tage vollständig entsalzt. Die Filterkartusche 5 kann dann entfernt und durch einen anderen Einsatz, z.B. einen Mikrogasblasenabscheider ersetzt werden.

### Bezugszeichenliste

- 1: Anschlussstück
- 2: erster Anschlussstutzen
- 3: zweiter Anschlussstutzen
- 4: Hülse
- 5: Filterkartusche
- 6: Zwischenvolumen
- 7: Verbindungsstutzen
- 8: Seitenwand
- 9: Boden
- 10: Schlitz
- 11: Zwischenboden
- 12: Stutzen
- 13: Ausströmöffnung
- 14: Überbrückungsöffnung
- 15: Filtergranulat

## Patentansprüche

1. Filterkartusche (5) mit einem Gehäuse, das eine umlaufende Seitenwand (8) aufweist, welche ein mindestens teilweise mit einem nicht wasserlöslichen Filtergranulat (15) gefülltes Filtervolumen umgibt sowie eine mit Öffnungen (10) versehene erste Querwand, welche das Filtervolumen an einem Zuflussbereich verschliesst und eine von der ersten Querwand beabstandete, ebenfalls mit Öffnungen (10) versehene zweite Querwand, welche das Filtervolumen an einem Abflussbereich verschliesst sowie einen von der zweiten Querwand zu einer Ausströmöffnung (13) führenden Stutzen (12), **dadurch gekennzeichnet, dass** das Filtergranulat (15) derart ausgebildet ist, dass es nicht durch die Öffnungen (10) entweichen kann und dass der Stutzen (12) mit mindestens einer eine Aussenseite der Filterkartusche (5) mit der Ausströmöffnung (13) verbindenden Überbrückungsöffnung (14) versehen ist sodass der Strömungswiderstand im Kreislauf nicht wesentlich erhöht wird.

2. Filterkartusche nach Anspruch 1, **dadurch gekennzeichnet, dass** der Stutzen (12) durch mehrere über seinen Umfang verteilte Überbrückungsöffnungen (14) durchbrochen ist.

3. Filterkartusche nach Anspruch 1 oder 2, **dadurch gekennzeichnet, dass** die Seitenwand (8) annähernd zylindermantelförmig ausgebildet ist und die erste Querwand als an einem unteren Ende derselben angeordneter Boden (9) und die zweite Querwand als an einem oberen Ende derselben angeordneter Zwischenboden (11) ausgebildet sind.

4. Filterkartusche nach Anspruch 3, **dadurch gekennzeichnet, dass** der Stutzen (12) annähernd zylindrisch ausgebildet ist und über ein unmittelbar oberhalb des Zwischenbodens (11) liegendes kreisringförmiges Zwischenstück an die Seitenwand (8) anschliesst.

5. Filterkartusche nach Anspruch 4, **dadurch gekennzeichnet, dass** der Stutzen (12) ein Aussengewinde aufweist.

6. Filterkartusche nach einem der Ansprüche 1 bis 5, **dadurch gekennzeichnet, dass** die Öffnungen im Boden (9) und im Zwischenboden (11) jeweils als Schlitze (10) ausgebildet sind.

7. Filterkartusche nach einem der Ansprüche 1 bis 6, **dadurch gekennzeichnet, dass** das Filtergranulat (15) zwischen 50% und 90% des Filtervolumens ausfüllt.

8. Filterkartusche nach einem der Ansprüche 1 bis 7, **dadurch gekennzeichnet, dass** das Filtergranulat (15) mindestens zum Teil aus einem Ionentauscherharz besteht.

9. Filtereinrichtung mit einer Filterkartusche (5) nach einem der Ansprüche 1 bis 8, **dadurch gekennzeichnet, dass** sie ein Filtergehäuse umfasst mit einem ersten Anschlussstutzen (2), welcher eine Zuflussleitung bildet, die in ein die Aussenseite der Filterkartusche (5) umgebendes Zwischenvolumen (6) mündet, mit einem zweiten Anschlussstutzen (3), welcher eine Abflussleitung bildet und mit einem Verbindungsstutzen (7), der mit dem zweiten Anschlussstutzen (3) verbunden ist und an welchen der Stutzen (12) der Filterkartusche (5) anschliesst.

10. Filtereinrichtung nach Anspruch 9, **dadurch gekennzeichnet, dass** sie eine Hülse (4) umfasst, welche die Filterkartusche (5) mit Abstand umgibt, derart, dass das Zwischenvolumen (6) zwischen der Hülse (4) und der Aussenseite der Filterkartusche (5) liegt.

11. Filtereinrichtung nach Anspruch 10, **dadurch gekennzeichnet, dass** der erste Anschlussstutzen (2), der zweite Anschlussstutzen (3) und der Verbindungsstutzen (7) jeweils Teile eines Anschlussstücks (1) sind und die Hülse (4) mit demselben verschraubt ist.

## Claims

1. A filter cartridge (5) with a housing that has a circumferential side wall (8) enclosing a filter volume filled at least partially with a filter granulate (15) that is at least partially insoluble in water, a first transverse wall provided with openings (10), the transverse wall closing off the filter volume in an inlet area, and a second transverse wall spaced apart from the first transverse wall and also provided with openings (10), the second transverse wall closing off the filter volume in an outlet area, as well as a port (12) leading from the second transverse wall to an outflow opening (13), **characterised in that** the filter granulate (15) is configured in such a way that it cannot escape through the openings (10), and **in that** the port (12) is provided with at least one bridging opening (14) connecting an outer side of the filter cartridge (5) to the outflow opening (13) so that the flow resistance in the circuit is not substantially increased.

2. The filter cartridge according to claim 1, **characterised in that** the port (12) is perforated by a plurality of bridging openings (14) distributed around its circumference.

3. The filter cartridge according to claim 1 or 2, **characterised in that** the side wall (8) is configured approximately as a cylinder surface, and that the first transverse wall is configured as a bottom (9) arranged at a lower end of the side wall and the second transverse wall is configured as an intermediate floor (11) arranged at an upper end of the side wall.

4. The filter cartridge according to claim 3, **characterised in that** the port (12) has an approximately cylindrical configuration and connects to the side wall (8) by means of a circular intermediate piece arranged immediately above the intermediate floor (11).

5. The filter cartridge according to claim 4, **characterised in that** the port (12) presents an external thread.

6. The filter cartridge according to any one of claims 1 to 5, **characterised in that** the openings in the bottom (9) and in the intermediate floor (11) are respectively formed as slots (10).

7. The filter cartridge according to any one of claims 1 to 6, **characterised in that** the filter granulate (15) takes up between 50 % and 90 % of the filter volume.

8. The filter cartridge according to any one of claims 1 to 7, **characterised in that** the filter granulate (15) at least partially consists of an ion exchange resin.

9. A filter device having a filter cartridge (5) according to any one of claims 1 to 8, **characterised in that** it comprises a filter housing with a first connecting port (2) forming an inlet line opening into an intermediate volume (6) surrounding the outside of the filter cartridge (5), a second connecting port (3) forming an outlet line and being connected to a connecting joint (7) connected to the second connecting port (3) and to which the port (12) of the filter cartridge (5) is connected.

10. The filter device according to claim 8, **characterised in that** it comprises a sleeve (4) surrounding the filter cartridge (5) with a distance in such a way that the intermediate volume (6) lies between der sleeve (4) and the outer side of the filter cartridge (5) .

11. The filter device according to claim 10, **characterised in that** the first connecting port (2), the second connecting port (3) and the connecting joint (7) are respectively part of a connecting piece (1), and that the sleeve (4) is screwed onto the latter.

## Revendications

1. Cartouche filtrante (5) avec un boîtier ayant une paroi latérale périphérique (8) entourant un volume filtrant au moins partiellement rempli d'un granulé filtrant (15) insoluble dans l'eau, et une première paroi transversale munie d'ouvertures (10) qui ferme le volume filtrant dans une zone d'entrée, et une deuxième paroi transversale, aussi munie d'ouvertures (10) et espacée de la première paroi transversale, qui ferme le volume filtrant dans une zone de sortie, et un embout (12) menant de la deuxième paroi transversale à une ouverture de sortie (13), **caractérisée en ce que** le granulé filtrant (15) est configuré de telle manière qu'il ne peut pas échapper à travers les ouvertures (10), et **en ce que** l' embout (12) est muni d'une ouverture de pontage (14) raccordant un côté extérieur de la cartouche filtrante (5) à l'ouverture de sortie (13), de sorte que la résistance à l'écoulement dans le circuit ne soit pas augmentée de manière significative.

2. Cartouche filtrante selon la revendication 1, **caractérisée en ce que** l'embout (12) est perforé par plusieurs ouvertures de pontage (14) réparties sur sa circonférence.

3. Cartouche filtrante selon la revendication 1 ou 2, **caractérisée en ce que** la paroi latérale (8) est configurée approximativement sous forme d'une enveloppe cylindrique, et la première paroi transversale est configurée sous forme d'un fond (9) disposé à une extrémité inférieure de celle-ci, et la deuxième paroi transversale comme un fond intermédiaire (11) disposé à une extrémité supérieure de celle-ci.

4. Cartouche filtrante selon la revendication 3, **caractérisée en ce que** l'embout (12) est configuré approximativement sous forme cylindrique et est relié à la paroi latérale (8) au moyen d'une pièce intermédiaire sous forme d'anneau circulaire située immédiatement au-dessus du fond intermédiaire (11).

5. Cartouche filtrante selon la revendication 4, **caractérisée en ce que** l'embout (12) présente un filetage extérieur.

6. Cartouche filtrante selon l'une quelconque des revendications 1 à 5, **caractérisée en ce que** les ouvertures dans le fond (9) et dans le fond intermédiaire (11) sont respectivement configurées sous forme de fentes (10).

7. Cartouche filtrante selon l'une quelconque des revendications 1 à 6, **caractérisée en ce que** le granulé filtrant (15) remplit entre 50% et 90% du volume filtrant.

8. Cartouche filtrant selon l'une quelconque des revendications 1 à 7, **caractérisée en ce que** le granulé filtrant se compose au moins en partie d'une résine échangeuse d'ions.

9. Dispositif de filtre avec une cartouche filtrante (5) selon l'une quelconque des revendications 1 à 8, **caractérisé en ce qu'**il comprend un boîtier de filtre avec un premier embout de raccordement (2) formant une ligne d'entrée débouchant dans un volume intermédiaire (6) entourant l'extérieur de la cartouche filtrante (5), avec un second embout de raccordement (3) formant une ligne de sortie, et avec un embout de connexion (7) relié au second embout de raccordement (3) et auquel l'embout de raccordement (12) de la cartouche filtrante (5) est relié.

10. Dispositif de filtre selon la revendication 9, **caractérisé en ce qu'**il comprend un manchon (4) qui entoure la cartouche filtrante (5) avec une distance, de telle manière que le volume intermédiaire (6) est situé entre le manchon (4) et le côté extérieur de la cartouche filtrante.

11. Dispositif de filtre selon la revendication 10, **caractérisé en ce que** le premier embout de raccordement (2), le second embout de raccordement (3) et l'embout de connexion (7) font respectivement partie d'un élément de connexion (1), et le manchon (4) est vissé avec celui-ci.
